# EUROPÄISCHE PATENTSCHRIFT

(11) **EP 3 737 777 B1**
(45) Veröffentlichungstag und Bekanntmachung des Hinweises auf die Patenterteilung: **18.05.2022**
(21) Anmeldenummer: 18812084.4
(22) Anmeldetag: 20.11.2018
(51) Int. Cl.: C22C 21/00, C22F 1/04, F16C 9/02, F16C 9/04, F16C 33/12

(54) **GLEITLAGERELEMENT**
SLIDING BEARING ELEMENT
ÉLÉMENT DE PALIER LISSE

(30) Priorität: 12.01.2018 DE 102018100659
(43) Veröffentlichungstag der Anmeldung: 18.11.2020
(73) Patentinhaber: KS Gleitlager GmbH, 68789 St. Leon-Rot (DE)
(72) Erfinder: BUERKLE, Gunter, 71726 Benningen (DE); SCHUBERT, Werner, 69168 Wiesloch (DE)
(74) Vertreter: DREISS Patentanwälte PartG mbB
(86) Internationale Anmeldenummer: PCT/EP2018/081968
(87) Internationale Veröffentlichungsnummer: WO 2019/137673

(56) Entgegenhaltungen:
- EP-A1- 2 985 358
- DE-A1-102013 210 663
- DE-B9-102013 210 663

## Beschreibung

Die vorliegende Erfindung betrifft ein Gleitlagerelement insbesondere Radialgleitlagerelement oder Anlaufscheibe, insbesondere zur Lagerung der Kurbelwelle oder eines Pleuels bei Verbrennungsmotoren, mit einer metallischen Stützschicht, insbesondere aus Stahl, mit einer Lagermetallschicht aus einer bleifreien, Magnesium und Mangan umfassenden Aluminiumbasislegierung und mit einer Laufschicht, wobei die Aluminiumbasislegierung vorzugsweise abschließend umfasst 0,5 - 6,0 Gew.-% Magnesium, 0,05-2 Gew.-% Mangan, gegebenenfalls eine oder mehrere der nachfolgenden Legierungskomponenten 0,5 - 7,5 Gew.-% Zink, 0,5 - 6 Gew.-% Silizium, bis 5 Gew.-% Kupfer, 0,05-0,5 Gew.-% Eisen, 0,05 - 1 Gew.-% Chrom, 0,05 - 0,5 Gew.-% Titan, 0,05 - 0,5 Gew.-% Zirkonium, 0,05 - 0,5 Gew.-% Vanadium, 0,1 - 3 Gew.-% Nickel, 0,1 - 1 Gew.-% Kobalt, 0,05 - 0,5 Gew.-% Cer, und verunreinigungsbedingte Legierungskomponenten, wobei letztere in der Summe 1 Gew.-% nicht übersteigen, und Rest Aluminium, und wobei ein Gesamtgehalt an Zink, Kupfer und Nickel in Summe 8 Gew.-% nicht übersteigt und ein Gesamtgehalt aller Legierungskomponenten in Summe 12 Gew.-% nicht übersteigt.

Ein derartiges Gleitlagerelement ist bekannt aus EP 2 985 358 B1. Durch eine Wärmebehandlung des Verbunds aus Stützschicht und Lagermetallschicht bei Temperaturen zwischen 280° bis 350°C für zwei bis zehn Stunden lässt sich bei der Lagermetallschicht eine Brinell-Härte von 50 bis 80 HB 1/5/30 erzielen. Im Zusammenwirken mit der den Gleitpartner kontaktierenden Laufschicht ergibt sich ein Gleitlagerelement, das sich als außergewöhnlich belastbar und zudem ermüdungsfest und fresssicher und damit für verbrennungsmotornahe Anwendungen in der modernen Kfz-Technik geeignet erwiesen hat. Als Laufschicht wurde eine galvanische Schicht oder eine Sputter-Schicht eingesetzt.

Der vorliegenden Erfindung liegt die Aufgabe zugrunde, ein gleichermaßen hochbelastbares Gleitlagerelement, insbesondere für die Lagerung von Kurbelwellen und Pleuelstangen bei einem Verbrennungsmotor zu schaffen, das gegenüber dem vorbekannten Gleitlagerelement wirtschaftlicher herstellbar ist.

Diese Aufgabe wird bei einem Gleitlagerelement der genannten Art erfindungsgemäß dadurch gelöst, dass bei der Lagermetallschicht eine aluminiumoxidreiche Oberflächenzone einer Dicke von 0,5 - 5 µm erzeugt ist, indem eine Oberseite der Lagermetallschicht vor dem Aufbringen der Laufschicht mechanisch gestrahlt wurde und danach die Laufschicht auf die gestrahlte Oberseite der Lagermetallschicht aufgebracht wurde, und dass die Laufschicht eine Gleitlackschicht mit einem polymeren Bindemittel ist.

Durch die erfindungsgemäße Maßnahme des Strahlens einer Oberseite der Lagermetallschicht konnte eine Oberflächenrauheit bei der mit einer moderaten Härte ausgebildeten Laufschicht aus Aluminiumbasislegierung realisiert werden, die die Aufbringung und hinreichende Verklammerung einer Gleitlackschicht auf Polymerbasis überhaupt erst ermöglicht. Bei weichen zinnhaltigen Aluminiumlegierungen wurde zwar bereits früher eine Gleitlackschicht als Laufschicht aufgebracht, die dann aber nur moderaten Belastungen bei diesen zinnhaltigen Aluminiumlegierungen ausgesetzt war. Bei hier in Rede stehenden hochbelastbaren Gleitlagern mit einer Lagermetallschicht der beanspruchten Zusammensetzung war man davon ausgegangen, dass nur mit galvanischen Laufschichten oder Sputterschichten gearbeitet werden kann. Durch das mechanische Strahlen der Oberseite der Lagermetallschicht wird aber nicht nur eine dreidimensional gestaltete Rauheit und Oberflächentopographie erzeugt, sondern das beim Strahlen freigelegte metallische Aluminium der Aluminiumbasislegierung wandelt sich in Kontakt mit Sauerstoff unmittelbar in einen nur wenige Nanometer dicken Aluminiumoxidüberzug um. Dieses Aluminiumoxid wird wiederum durch das Strahlen in die zerklüftete Oberfläche der Lagermetallschicht eingearbeitet, so dass hierdurch die gegenüber tieferen Bereichen der Lagermetallschicht aluminiumoxidreiche Oberflächenzone gebildet wird. Aufgrund der sehr verschleißfesten Aluminiumoxidpartikel wird die Lagermetallschicht in dieser Oberflächenzone besonders verschleißfest ausgebildet, was sich beim Abtrag der dünnen Gleitlackschicht als vorteilhaft erweist. In der tribologisch wirksamen Zone zum Reibpartner hin bietet das Gleitlagerelement aufgrund der Strahlbehandlung und der Beschichtung mit Gleitlack eine hohe Verschleißfestigkeit und dennoch gute Reibeigenschaften, indem der Gleitlack auf Polymerbasis in durch die Rauheit gebildeten Tälern und Taschen der Oberseite der Lagermetallschicht aufgenommen ist.

Es erweist sich als vorteilhaft, wenn das polymere Bindemittel der Gleitlackschicht PAI, PI oder Epoxid ist. Weiter kann es sich als vorteilhaft erweisen, wenn die Gleitlackschicht von dem polymeren Bindemittel matrixartig aufgenommene Festschmierstoffe, vorzugsweise Graphit, Metallsulfide, wie MoS₂, WS₂, oder hexagonales Bornitrid umfasst.

Während Mangan in der eingangs genannten EP 2 985 358 B1 der Anmelderin als optionales Legierungselement angesehen wurde, wurde vorliegend weiter erkannt, dass sich Mangan insoweit als vorteilhaft erweist, als es die Zugfestigkeit und die Dehngrenze erhöht und die Korrosionsbeständigkeit verbessert.

Weiter erweist es sich als vorteilhaft, dass die Oberseite der metallischen Lagermetallschicht vor dem Aufbringen der Laufschicht derart gestrahlt wurde, dass sie eine sogenannte reduzierte Talhöhe S_{VK} von 0,5 - 1,5 µm und ein sogenanntes leeres Volumen der Täler V_{VV} von 0,06-0,16 µm³/µm² aufweist (S_{VK}, V_{VV} bestimmt nach DIN EN ISO 25178, Teil 2, 2012; V_{VV} bestimmt bei einem Materialanteil p von 80 %).

Es wurde insbesondere weiter festgestellt, dass beim Starten des Motors im Zuge des Übergangs von Haftreibung zu Gleitreibung beträchtliche Scherkräfte im Kontaktbereich der Welle zur Laufschicht entstehen. Bei mit Start-Stopp-Betrieb ausgestatteten Fahrzeugen wirkt sich dies aufgrund der größeren Häufigkeit des Startens kritisch aus. In dieser Betriebsart ist die Verschleißfestigkeit der Laufschicht nicht nur durch deren Material- und Schichtparameter bestimmt, sondern für die Verschleißfestigkeit erweist sich die Verklammerung der Laufschicht zur Lagermetallschicht für die Aufnahme der Scherkräfte als sehr wesentlich. Es wurde nun weiter festgestellt, dass die beiden Parameter, nämlich die reduzierte Talhöhe und das leere Volumen der Täler, beide gemäß DIN EN ISO 25178, Teil 2, 2012, wesentliche Oberseiten- oder Oberflächenparameter zur Erzielung einer sich als vorteilhaft erweisenden Verklammerung der Laufschicht auf der Oberseite der Lagermetallschicht darstellen. Es wurde festgestellt, dass eine Vergrößerung der Täler, und zwar im Hinblick auf deren Tiefe und im Hinblick auf deren befüllbares Volumen zu einer Erhöhung und damit Verbesserung der Verschleißfestigkeit führt. Ferner wurde diesbezüglich aber ein Zielkonflikt ermittelt, und zwar dahingehend, dass mit einer Vergrößerung der beiden Parameter, d.h. mit einer Zunahme der Rauheit oder der Vergrößerung der funktionellen Aufrauung Probleme, und zwar im allgemeinen in Form einer Abnahme der Fresslast, auftreten. Eine Zunahme der Rauheit bedingt eine Verringerung der Anpassungsfähigkeit und behindert den Aufbau einer guten Hydrodynamik, weil die aufgebrachte Laufschicht die Rauheit der Lagermetallschicht relativ gut nachbildet, also erhält und nicht etwa zu einem Großteil ausgleicht. Dies führt aber in Fresstests zur Erhöhung des Mischreibungsanteils und damit der Reibwärme, die bei und infolge zunehmender Rauheit und notleidender Hydrodynamik nicht rasch genug abgeführt werden kann. Mit der vorliegenden Erfindung wurde dieser Zielkonflikt erkannt und eine sich als vorteilhaft erweisende funktionale Oberseitengestaltung der Lagermetallschicht ermittelt, die eine gute Verklammerung der Laufschicht mit der Lagermetallschicht gestattet und aufgrund des Strahlens die aluminiumoxidreiche Oberflächenzone bildet, welche die Verschleißfestigkeit verbessert und sich damit auch im Start-Stopp-Betrieb bewährt. Dort kommt es nämlich jeweils beim Starten vermehrt zu einem Übergang von Haftreibung zu Gleitreibung, und damit zu den geschilderten kritischen Situationen. Durch eine bessere Verklammerung der Laufschicht mit der Lagermetallschicht und eine Erhöhung der Verschleißfestigkeit an der Oberseite der Lagermetallschicht werden diese kritischen Situationen aber entschärft.

Es wurde erkannt, dass die Parameter der reduzierten Talhöhe S_{VK} und des leeren Volumens der Täler V_{VV} funktionale Rauheitsparameter darstellen, welche auch Rückschlüsse auf das Schmierverhalten einer Oberseitentopologie gestatten. Eine Zunahme dieser funktionalen Rauheitsparameter bedeutet also einerseits eine bessere Verklammerung der Laufschicht und damit eine Verbesserung der Verschleißfestigkeit, andererseits jedoch eine Verringerung der Anpassungsfähigkeit mit den dadurch bedingten Folgeproblemen. Basierend auf dieser Erkenntnis wurde der beanspruchte Parameterbereich dieser Parameter ermittelt.

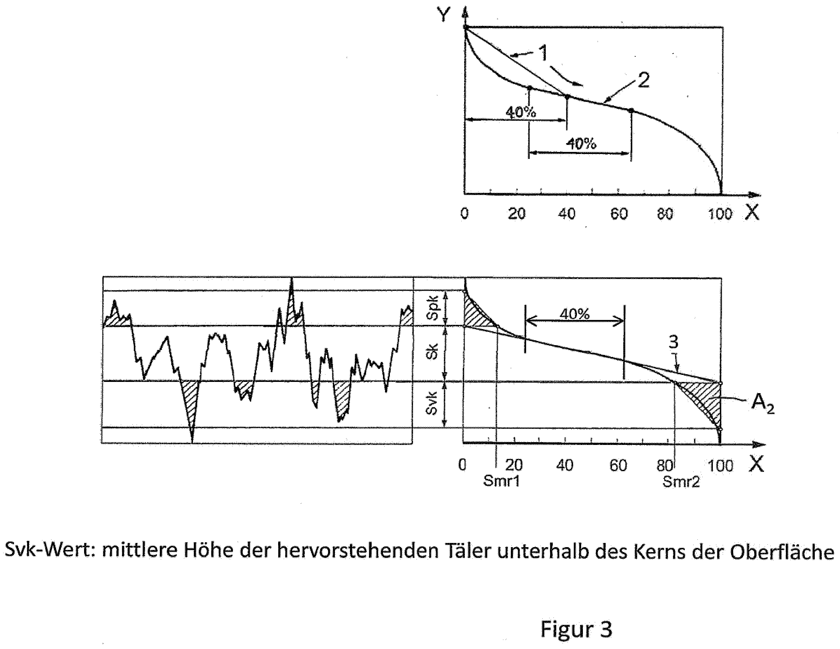

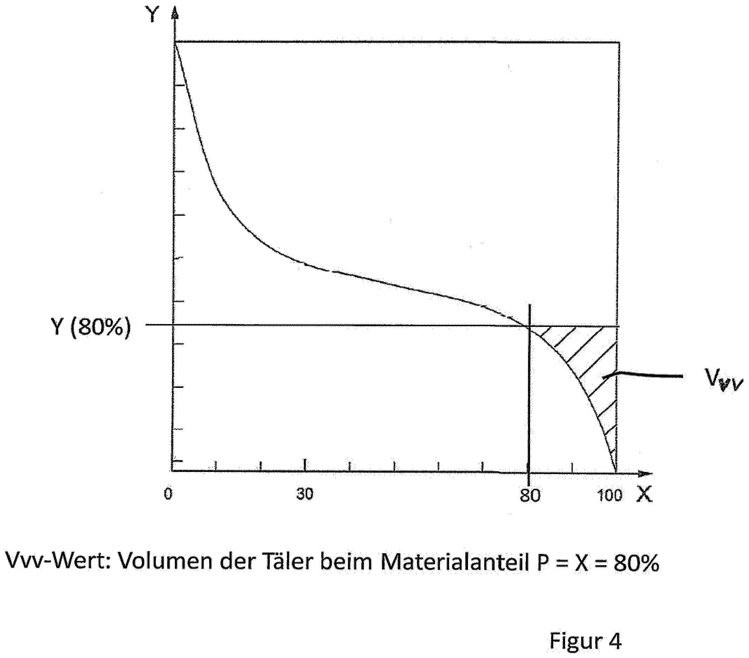

Die Figuren 3 und 4 verdeutlichen die Parameter der reduzierten Talhöhe S_{VK} und des leeren Volumens der Täler V_{VV}. Bei der reduzierten Talhöhe S_{VK} handelt es sich um die mittlere Höhe der hervorstehenden Täler unterhalb des sogenannten Kerns der Oberseite.

Die reduzierte Talhöhe S_{VK} ist gemäß DIN EN ISO 25178 Teil 2 wie in Figur 3 gezeigt definiert. Man ermittelt hierfür zunächst den Kern oder die Kernhöhe Sk der Topographie anhand einer Sekante bei einer Kurve, welche den flächenhaften Materialanteil X der Oberfläche als Funktion der Höhe oder Dicke Y darstellt, wie folgt: Man beginnt bei der maximalen Dicke oder Höhe Y, was also einen Materialanteil X von null entspricht, und zeichnet von dort eine Sekante 1 zu demjenigen Wert der Kurve, für den der Materialanteil X 40 % beträgt. Sodann wird diese Sekante, die einen Materialanteil von 40 % überfängt, in Richtung höherer Materialanteile verschoben, und zwar so lange bis ihre Steigung/Gradient den geringsten Wert annimmt, bevor sie also bei weiterer Verschiebung wieder steiler wird. Diese Lage der Sekante ist mit Bezugszeichen 2 in Figur 3 bezeichnet. In dieser Position wird diese Sekante 2 zu der Geraden 3 verlängert. Ihr Schnittpunkt mit der Y-Koordinatenachse bei X=0% und bei X=100 % bezeichnet den Kern bzw. die Kernhöhe Sk der Topographie. Die reduzierte Talhöhe S_{VK} ist nun die mittlere Höhe bzw. Tiefe der unterhalb des Kerns hervorstehenden bzw. sich nach unten erstreckenden Täler. S_{VK} wird gemäß DIN EN ISO 25178 Teil 2, 2012 Ziffer 5.3 ermittelt als die Höhe S_{VK} eines rechtwinkligen Dreiecks A2, das so konstruiert wird, dass es die gleiche Fläche wie der "Talbereich", also die aufsummierte Fläche der Täler unterhalb des Kerns in Figur 3 hat. Dieses Dreieck A2 hat also den Wert (100% - Smr2) als Basislänge und S_{VK} als Höhe.

Das leere Volumen der Täler V_{VV} ist aus Figur 4 ersichtlich, und zwar als integrierter Flächenanteil im dargestellten Bereich V_{VV}, wobei ein Materialanteil von X=80 % im Sinne der Norm DIN EN ISO 25178 Teil 2 zu Grunde gelegt wurde. 80 % Materialanteil bedeutet hierbei, dass bei einer Position in Dickenrichtung, also orthogonal zu der Oberseite, was in den Figuren 3, 4 der Y-Koordinatenrichtung entspricht, die projizierte Fläche der Täler (entspricht materialfrei) 20 % und der Materialanteil 80 % beträgt, wenn man die sich so ergebende Ebene oder Querschnittsfläche bei diesem Y-Wert in der Dickenrichtung oder Y-Koordinatenrichtung betrachtet. Das leere Volumen der Täler V_{VV} ist nun dasjenige materialfreie Volumen unterhalb dieser Ebene oder Querschnittsfläche, bezogen auf die Flächeneinheit, wie dies im Übrigen in der Norm DIN EN ISO 25178 Teil 2, 2012, angegeben ist.

Es sei noch darauf hingewiesen, dass die Gleitlackschicht bei dem fertigen Gleitlagerelement durch ein geeignetes Lösemittel wieder abgelöst werden kann, so dass nach dem Ablösen die exakte Topographie der dann freiwerdenden strukturierten gestrahlten Oberseite der Lagermetallschicht durch einschlägige Messverfahren, typischerweise durch optische Verfahren erfasst und ausgewertet werden kann.

Weiter erweist sich als vorteilhaft, dass die gestrahlte Oberseite der metallischen Lagermetallschicht eine sogenannte reduzierte Talhöhe S_{VK} von wenigstens 0,7 µm, insbesondere von wenigstens 0,9 µm und von höchstens 1,5 µm, insbesondere von höchstens 1,4 µm, insbesondere von höchstens 1,3 µm aufweist und ein sogenanntes leeres Volumen der Täler V_{VV} von wenigstens 0,08 µm³/µm², insbesondere von wenigstens 0,09 µm³/µm² und von höchstens 0,16 µm³/µm², insbesondere von höchstens von 0,15 µm³/µm², insbesondere von höchstens 0,14 µm³/µm² aufweist.

Es wird weiter vorgeschlagen, dass die Aluminiumbasislegierung kupferfrei ist oder 0,5 - 5 Gew.-%, insbesondere 0,5 - 3 Gew.-% Kupfer umfasst.

Es wird weiter vorgeschlagen, dass die Aluminiumbasislegierung 3 - 5,5 Gew.-% Magnesium umfasst.

Es wird weiter vorgeschlagen, dass die Aluminiumbasislegierung 0,2 - 1,0 Gew.-% Mangan umfasst.

Vorzugsweise besteht die Aluminiumbasislegierung aus den im Anspruch 1 aufgeführten Legierungsbestandteilen.

Die Gleitlackschicht kann auf die so behandelte Oberseite der Lagermetallschicht aufgesprüht, aufgewalzt oder aufextrudiert werden.

Es wird weiter vorgeschlagen, dass die Schichtdicke der Laufschicht 2 - 25 µm, insbesondere 4 - 20 µm beträgt.

Es wird auch Schutz beansprucht für ein Verfahren zur Herstellung des Gleitlagerelements mit den Merkmalen der Ansprüche 9-16.

Dabei erweist es sich als vorteilhaft, wenn die Lagermetallschicht mit einem Strahldruck von 1,0 - 1,5 bar gestrahlt wird. Hierbei handelt es sich nicht um denjenigen Druck, den die strahlenden Partikel auf eine Auftrefffläche ausüben, sondern um den Druck unmittelbar vor der Strahldüse im Inneren der Strahlvorrichtung.

Weiter erweist es sich als vorteilhaft, wenn eine größte Abmessung eines Strahldüsenquerschnitts am Austritt 10-14 mm, insbesondere 11-13 mm, insbesondere 12 mm beträgt.

Es erweist sich weiter als vorteilhaft, wenn ein Abstand des Austritts der Strahldüse von der Oberseite der zu strahlenden Lagermetallschicht des Gleitlagerelements 80-120 mm, insbesondere 90-110 mm, insbesondere 100 mm beträgt.

Weiter erweist sie sich als vorteilhaft, wenn eine oder zwei oder drei Strahlvorrichtungen mit einer jeweiligen Strahldüse verwendet werden, die in Umfangsrichtung des Gleitlagerelements aufeinanderfolgend angeordnet sind.

Eine Vorschubgeschwindigkeit der Strahldüse beträgt vorteilhafterweise 5 mm/s bis 60 mm/s, insbesondere 10 mm/s bis 60 mm/s, insbesondere 10 mm/s bis 50 mm/s wobei diese Vorschubgeschwindigkeit beim Strahlen von Radialgleitlagerelementen, insbesondere Gleitlagerschalen, in axialer Richtung also in Richtung der Lagerelementbreite gerichtet ist.

Schließlich erweist es sich als vorteilhaft, wenn die Lagermetallschicht mit einem Strahlmittel, insbesondere Korund (Al₂O₃), einer Partikelgröße von höchstens 100 µm gestrahlt wird, wobei wenigstens 60 Masse-% des Strahlmittels eine Partikelgröße von wenigstens 45 µm aufweist. Dies ist dann der Fall, wenn bei einer Siebung unter Verwendung eines Siebs mit einer Maschenweite von 100 µm kein Siebrückstand erhalten wird und bei Siebung unter Verwendung eines Siebs einer Maschenweite von 45 µm ein Siebrückstand von wenigstens 60 Masse-% erhalten wird. Weiter erweist es sich als vorteilhaft, wenn das Strahlmittel dabei eine Mooshärte von wenigstens 8 und insbesondere von 9 aufweist. Es umfasst vorzugsweise eine kantige Kornform, also nicht eine sphärisch oder knollig verrundete Kornform. Ein geeignetes Strahlmittel ist unter dem Handelsnamen Edelkorund EKF 220 der Firma Kuhmichel erhältlich.

Weitere Einzelheiten, Merkmale und Vorteile der Erfindung ergeben sich aus den beigefügten Patentansprüchen und der nachfolgenden Beschreibung und zeichnerischen Darstellung von Ausführungsformen der Erfindung. In der Zeichnung zeigt:
Figur 1 eine schematische Darstellung einer erfindungsgemäßen Radiallagerschale;
Figur 2 eine schematische Darstellung einer beispielhaften Anordnung von Strahldüsen bei der Herstellung einer erfindungsgemäßen Radiallagerschale;
Figur 3 eine grafische Darstellung einer Oberseitentopologie der gestrahlten Lagermetallschicht zur Verdeutlichung und Ermittlung der reduzierten Talhöhe S_{VK};
Figur 4 eine grafische Darstellung einer Oberseitentopologie der erfindungsgemäß gestrahlten Lagermetallschicht zur Verdeutlichung des leeren Volumens der Täler V_{VV} bei einem Materialanteil von 80 %.

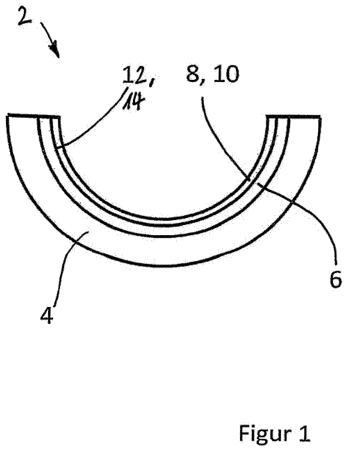

Figur 1 zeigt ein erfindungsgemäßes Gleitlagerelement 2 in Form einer schematisch dargestellten Radiallagerschale, welche zur Lagerung der Kurbelwelle bei einem Verbrennungsmotor dient. Die nicht maßstabsgetreu dargestellte Radiallagerschale umfasst im beispielhaft dargestellten Fall eine metallische Stützschicht 4 aus Stahl, eine darauf aufgebrachte Lagermetallschicht 6 auf Aluminium-Magnesium-Mangan-Basis der eingangs beschriebenen Art und eine darauf aufgebrachte Laufschicht 8, bei der es sich um eine Gleitlackschicht 10 auf Basis eines polymeren Bindemittels mit Füllstoffen handelt.

Die die Lagermetallschicht 6 bildende Al-Mg-Mn-Legierung kann auf eine zuvor auf die Stützschicht 4 aufgebrachte Zwischenschicht aus Reinaluminium oder aus einer Aluminiumlegierung oder aus Nickel aufplattiert werden; bevorzugt wird die Al-Mg-Mn-Legierung aber direkt auf die Stützschicht aus Stahl aufplattiert.

Sodann wird vorzugsweise eine Wärmebehandlung des Verbunds aus Stützschicht 4 und Lagermetallschicht 6 bei Temperaturen zwischen 280° bis 350°C für zwei bis zehn Stunden ausgeführt. Dabei lässt sich bei der Lagermetallschicht 6 eine Brinell-Härte von 50 bis 80 HB 1/5/30 erzielen, was sich für die spätere Verwendung als vorteilhaft erweist.

Danach wird der Verbund aus Stützschicht 4 und Lagermetallschicht 6 auf die Gestalt des herzustellenden Gleitlagerelements 2 gebracht, typischerweise in einem Biegeprozess.

Bevor die Laufschicht 8 auf eine dem Gleitpartner zugewandte, also von der Stützschicht 4 abgewandte Oberseite 12 der Lagermetallschicht 6 aufgebracht wird, wird diese Oberseite 12 erfindungsgemäß gestrahlt, so dass dabei wie eingangs erläutert eine aluminiumoxidreiche Oberflächenzone 14 erzeugt wird, die in der Figur 1 aber nicht aufgelöst ist.

Vorzugsweise wird durch das Strahlen eine Oberflächentopographie erzeugt, die eine sogenannte reduzierte Talhöhe S_{VK} von 0,5 - 1,5 µm und ein sogenanntes leeres Volumen der Täler V_{VV} von 0,06 - 0,16 µm³/µm² aufweist (S_{VK} und V_{VV} bestimmt nach DIN EN ISO 25178, Teil 2, 2012; V_{VV} bestimmt bei einem Materialanteil p von 80 %). Die durch den Strahlvorgang erzeugte Oberflächentopographie bei der Lagermetallschicht 6 ist in der Figur 1 jedoch nicht ersichtlich, da es sich hierbei um eine Mikrostrukturierung handelt. Die Laufschicht 8 wird dann auf die so behandelte Oberseite 14 der Lagermetallschicht 6 aufgebracht.

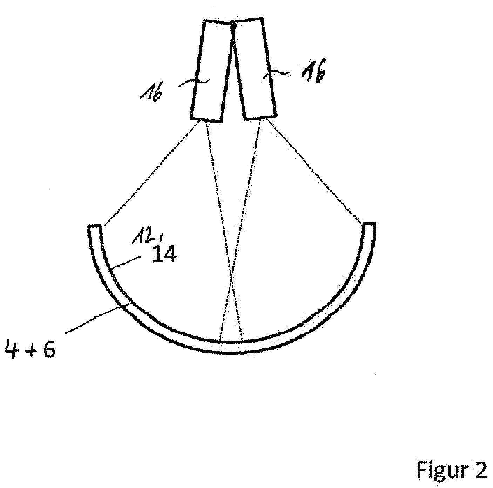

Figur 2 zeigt ebenfalls schematisch eine bevorzugte Anordnung von Strahldüsen 16 beim Strahlen der Oberseite 12 der Lagermetallschicht 6 einer Radiallagerschale. Die Vorschubbewegung der Strahldüsen 16 erfolgt im dargestellten Fall in axialer Richtung der Radiallagerschale, also senkrecht zur Zeichnungsebene.

Im Sinne der vorliegenden Erfindung bildet die gestrahlte Lagermetallschicht 6 im Verbund mit der Stützschicht 4 ein erfindungsgemäßes Zwischenprodukt im Zuge der Herstellung des Gleitlagerelements 2.

Schließlich wird die Gleitlackschicht 10 aufgesprüht, aufgewalzt oder aufextrudiert.

## Patentansprüche

1. Gleitlagerelement (2), insbesondere Radialgleitlagerelement oder Anlaufscheibe, insbesondere zur Lagerung der Kurbelwelle oder eines Pleuels bei Verbrennungsmotoren, mit einer metallischen Stützschicht (4), insbesondere aus Stahl, mit einer Lagermetallschicht (6) aus einer bleifreien, Magnesium und Mangan umfassenden Aluminiumbasislegierung und mit einer Laufschicht (8), wobei die Aluminiumbasislegierung umfasst 0,5 - 6,0 Gew.-% Magnesium, 0,05 - 2 Gew.-% Mangan, gegebenenfalls eine oder mehrere der nachfolgenden Legierungskomponenten 0,5 - 7,5 Gew.-% Zink, 0,5 - 6 Gew.-% Silizium, bis 5 Gew.-% Kupfer, 0,05-0,5 Gew.-% Eisen, 0,05 - 1 Gew.-% Chrom, 0,05-0,5 Gew.-% Titan, 0,05 - 0,5 Gew.-% Zirkonium, 0,05-0,5 Gew.-% Vanadium, 0,1 - 3 Gew.-% Nickel, 0,1-1 Gew.-% Kobalt, 0,05 - 0,5 Gew.-% Cer, und verunreinigungsbedingte Legierungskomponenten, wobei letztere in der Summe 1 Gew.-% nicht übersteigen, und Rest Aluminium, und wobei ein Gesamtgehalt an Zink, Kupfer und Nickel in Summe 8 Gew.-% nicht übersteigt und ein Gesamtgehalt aller Legierungskomponenten in Summe 12 Gew.-% nicht übersteigt, **dadurch gekennzeichnet, dass** bei der Lagermetallschicht (6) eine aluminiumoxidreiche Oberflächenzone (14) einer Dicke von 0,5 - 5 µm erzeugt ist, indem eine Oberseite (12) der Lagermetallschicht (6) vor dem Aufbringen der Laufschicht (8) mechanisch gestrahlt wurde und danach die Laufschicht (8) auf die gestrahlte Oberseite (12) der Lagermetallschicht (6) aufgebracht wurde, und dass die Laufschicht (8) eine Gleitlackschicht (10) mit einem polymeren Bindemittel ist.

2. Gleitlagerelement nach Anspruch 1, **dadurch gekennzeichnet, dass** das polymere Bindemittel der Gleitlackschicht PAI, PI oder Epoxid ist.

3. Gleitlagerelement nach Anspruch 1 oder 2, **dadurch gekennzeichnet, dass** die Oberseite (12) der metallischen Lagermetallschicht (6) vor dem Aufbringen der Laufschicht (8) derart gestrahlt wurde, dass sie eine sogenannte reduzierte Talhöhe S_{VK} von 0,5-1,5 µm und ein sogenanntes leeres Volumen der Täler V_{VV} von 0,06 - 0,16 µm³/µm² aufweist (S_{VK}, V_{VV} bestimmt nach DIN EN ISO 25178, Teil 2, 2012; V_{VV} bestimmt bei einem Materialanteil p von 80 %).

4. Gleitlagerelement (2) nach Anspruch 3, **dadurch gekennzeichnet, dass** die gestrahlte Oberseite (12) der metallischen Lagermetallschicht (6) eine sogenannte reduzierte Talhöhe S_{VK} von wenigstens 0,7 µm, insbesondere von wenigstens 0,9 µm und von höchstens 1,5 µm, insbesondere von höchstens 1,4 µm, insbesondere von höchstens 1,3 µm aufweist und ein sogenanntes leeres Volumen der Täler V_{VV} von wenigstens 0,08 µm³/µm², insbesondere von wenigstens 0,09 µm³/µm² und von höchstens 0,16 µm³/µm², insbesondere von höchstens von 0,15 µm³/µm², insbesondere von höchstens 0,14 µm³/µm² aufweist.

5. Gleitlagerelement nach einem oder mehreren der vorstehenden Ansprüche, **dadurch gekennzeichnet, dass** die Aluminiumbasislegierung kupferfrei ist oder höchstens 0,5 - 5 Gew.-% Kupfer umfasst.

6. Gleitlagerelement nach einem oder mehreren der vorstehenden Ansprüche, **dadurch gekennzeichnet, dass** die Aluminiumbasislegierung 3 - 5,5 Gew.-% Magnesium umfasst.

7. Gleitlagerelement nach einem oder mehreren der vorstehenden Ansprüche, **dadurch gekennzeichnet, dass** die Aluminiumbasislegierung 0,2 - 1,0 Gew.-% Mangan umfasst.

8. Gleitlagerelement (2) nach einem oder mehreren der vorstehenden Ansprüche, **dadurch gekennzeichnet, dass** die Schichtdicke der Laufschicht (8) 2 - 25 µm, insbesondere 4 - 20 µm beträgt.

9. Verfahren zum Herstellen eines Gleitlagerelements nach einem oder mehreren der Ansprüche 1-8, **dadurch gekennzeichnet, dass** ein Verbund aus metallischer Stützschicht (4) und Lagermetallschicht (6) auf die Gestalt des herzustellenden Gleitlagerelements (2) gebracht wird, dass danach eine Oberseite (12) der metallischen Lagermetallschicht (6) vor dem Aufbringen der Laufschicht (8) mechanisch gestrahlt wird, so dass bei der Lagermetallschicht (6) eine aluminiumoxidreiche Oberflächenzone (14) einer Dicke von 0,5 - 5 µm erzeugt wird, und dass eine Gleitlackschicht (10) mit einem polymeren Bindemittel als Laufschicht (8) auf die gestrahlte Oberseite (12) der Lagermetallschicht (6) aufgebracht, insbesondere aufgesprüht, aufgewalzt oder aufextrudiert, wird.

10. Verfahren nach Anspruch 09, **dadurch gekennzeichnet dass** durch Strahlen eine sogenannte reduzierte Talhöhe S_{VK} von 0,5 - 1,5 µm und ein sogenanntes leeres Volumen der Täler V_{VV} von 0,06 - 0,16 µm³/µm² erzeugt wird.

11. Verfahren nach einem oder mehreren der Ansprüche -9 oder 10, **dadurch gekennzeichnet, dass** die Lagermetallschicht (6) mit einem Strahldruck von 1,0-1,5 bar gestrahlt wird.

12. Verfahren nach einem oder mehreren der Ansprüche 9-11, **dadurch gekennzeichnet, dass** eine größte Abmessung eines Strahldüsenquerschnitts am Austritt 10-14 mm, insbesondere 11-13 mm, insbesondere 12 mm beträgt.

13. Verfahren nach einem oder mehreren der Ansprüche 9-12, **dadurch gekennzeichnet, dass** ein Abstand des Austritts der Strahldüse (16) von der Oberseite (12) der zu strahlenden Lagermetallschicht (6) des Gleitlagerelements 80-120 mm, insbesondere 90-110 mm, insbesondere 100 mm beträgt.

14. Verfahren nach einem oder mehreren der Ansprüche 9-13, **dadurch gekennzeichnet, dass** eine oder zwei oder drei Strahlvorrichtungen mit einer jeweiligen Strahldüse (16) verwendet werden, die in Umfangsrichtung des Gleitlagerelements aufeinanderfolgend angeordnet sind.

15. Verfahren nach einem oder mehreren der Ansprüche 9-14, **dadurch gekennzeichnet, dass** eine Vorschubgeschwindigkeit der Strahldüse (16) in axialer Richtung des Gleitlagerelements 5 mm/s bis 60 mm/s, insbesondere 10 mm/s bis 60 mm/s, insbesondere 10 mm/s bis 50 mm/s beträgt.

16. Verfahren nach einem oder mehreren der Ansprüche 9-15, **dadurch gekennzeichnet, dass** die Lagermetallschicht (6) mit einem Strahlmittel, insbesondere Korund, einer Partikelgröße von höchstens 100 µm gestrahlt wird, wobei wenigstens 60 Masse-% des Strahlmittels eine Partikelgröße von wenigstens 45 µm aufweist.

## Claims

1. Sliding bearing element (2), in particular a radial sliding bearing element or thrust washer, in particular for bearing the crankshaft or a connecting rod in internal combustion engines, comprising a metal protective layer (4), in particular made of steel, comprising a metal bearing layer (6) made of a lead-free aluminium-based alloy containing magnesium and manganese, and comprising a running layer (8), wherein the aluminium-based alloy contains 0.5-6.0 wt.% magnesium, 0.05-2 wt.% manganese, if applicable one or more of the following alloy constituents: 0.5-7.5 wt.% zinc, 0.5-6 wt.% silicon, up to 5 wt.% copper, 0.05-0.5 wt.% iron, 0.05-1 wt.% chromium, 0.05-0.5 wt.% titanium, 0.05-0.5 wt.% zirconium, 0.05-0.5 wt.% vanadium, 0.1-3 wt.% nickel, 0.1-1 wt.% cobalt, 0.05-0.5 wt.% cerium, and impurity-related alloy constituents, wherein the latter do not exceed 1 wt.% in total, and balance aluminium, and wherein a total content of zinc, copper and nickel does not exceed 8 wt.% in total and a total content of all alloy constituents does not exceed 12 wt.% in total, **characterised in that** a surface region (14) rich in aluminium oxide with a thickness of 0.5-5 µm is produced in the metal bearing layer (6) by mechanically blasting an upper face (12) of the metal bearing layer (6) prior to application of the running layer (8) and then applying the running layer (8) to the blasted upper face (12) of the metal bearing layer (6), and **in that** the running layer (8) is an anti-friction coating (10) having a polymer binder.

2. Sliding bearing element according to claim 1, **characterised in that** the polymer binder of the anti-friction coating is PAI, PI or epoxy.

3. Sliding bearing element according to claim 1 or 2, **characterised in that** the upper face (12) of the metal bearing layer (6) was blasted prior to application of the running layer (8) such that it has a so-called reduced valley height S_{VK} of 0.5-1.5 µm and a so-called empty volume of the valleys V_{VV} of 0.06-0.16 µm³/µm² (S_{VK}, Vᵥᵥ determined according to DIN EN ISO 25178, Part 2, 2012; Vᵥᵥ determined at a material proportion p of 80%) .

4. Sliding bearing element (2) according to claim 3, **characterised in that** the blasted upper face (12) of the metal bearing layer (6) has a so-called reduced valley height S_{VK} of at least 0.7 µm, in particular at least 0.9 µm and at most 1.5 µm, in particular at most 1.4 µm, in particular at most 1.3 µm, and a so-called empty volume of the valleys Vᵥᵥ of at least 0.08 µm³/µm², in particular at least 0.09 µm³/µm² and at most 0.16 µm³/µm², in particular at most 0.15 µm³/µm², in particular at most 0.14 µm³/µm².

5. Sliding bearing element according to one or more of the preceding claims, **characterised in that** the aluminium-based alloy is copper-free or contains at most 0.5-5 wt.% copper.

6. Sliding bearing element according to one or more of the preceding claims, **characterised in that** the aluminium-based alloy contains 3-5.5 wt.% magnesium.

7. Sliding bearing element according to one or more of the preceding claims, **characterised in that** the aluminium-based alloy contains 0.2-1.0 wt.% manganese.

8. Sliding bearing element (2) according to one or more of the preceding claims, **characterised in that** the layer thickness of the running layer (8) is 2-25 µm, in particular 4-20 µm.

9. Method for producing a sliding bearing element according to one or more of claims 1-8, **characterised in that** a combination of the metal protective layer (4) and the metal bearing layer (6) is brought into the shape of the sliding bearing element (2) to be produced, **in that**, subsequently, an upper face (12) of the metal bearing layer (6) is mechanically blasted prior to application of the running layer (8), such that a surface region (14) rich in aluminium oxide with a thickness of 0.5-5 µm is produced in the metal bearing layer (6), and **in that** an anti-friction coating (10) having a polymer binder is applied to, in particular sprayed on, rolled on or extruded on, the blasted upper face (12) of the metal bearing layer (6) as the running layer (8).

10. Method according to claim 9, **characterised in that** a so-called reduced valley height S_{VK} of 0.5-1.5 µm and a so-called empty volume of the valleys Vᵥᵥ of 0.06-0.16 µm³/µm² is produced by means of blasting.

11. Method according to one or more of claims 9 or 10, **characterised in that** the metal bearing layer (6) is blasted with a blasting pressure of 1.0-1.5 bar.

12. Method according to one or more of claims 9-11, **characterised in that** a maximum dimension of a blast nozzle cross-section at the outlet is 10-14 mm, in particular 11-13 mm, in particular 12 mm.

13. Method according to one or more of claims 9-12, **characterised in that** a distance from the outlet of the blast nozzle (16) to the upper face (12) of the sliding bearing element metal bearing layer (6) to be blasted is 80-120 mm, in particular 90-110 mm, in particular 100 mm.

14. Method according to one or more of claims 9-13, **characterised in that** one or two or three blast devices each having one blast nozzle (16) and arranged one after the other in the circumferential direction of the sliding bearing element are used.

15. Method according to one or more of claims 9-14, **characterised in that** an advance speed of the blast nozzle (16) in the axial direction of the sliding bearing element is 5 mm/s to 60 mm/s, in particular 10 mm/s to 60 mm/s, in particular 10 mm/s to 50 mm/s.

16. Method according to one or more of claims 9-15, **characterised in that** the metal bearing layer (6) is blasted with a blasting agent, in particular corundum, with a particle size of at most 100 µm, wherein at least 60% by mass of the blasting agent has a particle size of at least 45 µm.

## Revendications

1. Élément de palier lisse (2), en particulier un élément de palier lisse radial ou une rondelle de butée, en particulier pour le montage du vilebrequin ou d'une bielle dans des moteurs à combustion interne, avec une couche de support métallique (4), en particulier en acier, avec une couche métallique de palier (6) en un alliage à base d'aluminium exempt de plomb contenant du magnésium et du manganèse, et avec une couche de roulement (8), dans lequel l'alliage à base d'aluminium comprend de 0,5 à 6,0 % en poids de magnésium,de 0,05 à 2 % en poids de manganèse, facultativement un ou plusieurs des composants d'alliage suivants: de 0,5 à 7,5 % en poids de zinc, de 0,5 à 6 % en poids de silicium, jusqu'à 5 % en poids de cuivre, de 0,05 à 0,5 % en poids de fer, de 0,05 à 1 % en poids de chrome, de 0,05 à 0,5 % en poids de titane, de 0,05 à 0,5 % en poids de zirconium, de 0,05 à 0,5 % en poids de vanadium, de 0,1 à 3 % en poids de nickel, de 0,1 à 1 % en poids de cobalt, de 0,05 à 0,5 % en poids de cérium, et des composants d'alliage liés aux impuretés, dans lequel ces derniers n'excèdent pas 1 % en poids au total, et le reste étant de l'aluminium, et dans lequel une teneur totale en zinc, cuivre et nickel dans la taille des particules n'excède pas 8 % en poids et une teneur totale de tous les composants d'alliage n'excède pas 12 % en poids, **caractérisé en ce qu'**une zone de surface riche en aluminium (14) d'une épaisseur de 0,5 à 5 µm est produite dans la couche métallique de palier (6) grâce à un côté supérieur (12) de la couche métallique de palier (6) qui a été irradié avant l'application de la couche de roulement (8), puis la couche de roulement (8) a été irradiée sur le côté supérieur (12) de la couche métallique de palier (6), et **en ce que** la couche de roulement (8) est une couche de vernis de glissement (10) avec un liant polymère.

2. Élément de palier lisse selon la revendication 1, **caractérisé en ce que** le liant polymère de la couche de vernis de glissement est du PAI, du PI ou de l'époxyde.

3. Élément de palier lisse selon la revendication 1 ou 2, **caractérisé en ce que** le côté supérieur (12) de la couche métallique de palier (6) a été irradié avant l'application de la couche de roulement (8), **en ce qu'**il présente une hauteur de vallée dite réduite S_{VK} de 0,5 à 1,5 µm et un volume dit vide des vallées V_{VV} de 0,06 à 0,16 µm³/gm² (SvK, VVV, déterminé selon DIN EN ISO 25178, partie 2, 2012; V_{VV} déterminé à une teneur en matériau p de 80 %).

4. Élément de palier lisse (2) selon la revendication 3, **caractérisé en ce que** le côté supérieur irradié (12) de la couche de support métallique (6) présente une hauteur dite de vallée réduite S_{VK} d'au moins 0,7 µm, en particulier d'au moins 0,9 µm et d'au plus 1,5 µm, en particulier d'au plus 1,4 µm, en particulier d'au plus 1,3 µm, et présente un volume dit vide des vallées V_{VV} d'au moins 0,08 µm³/µm², en particulier d'au moins 0,09 µm³/µm² et d'au plus 0,16 µm³/µm², en particulier d'au plus 0,15 µm³/µm², en particulier d'au plus 0,14 µm³/µm².

5. Élément de palier lisse selon une ou plusieurs des revendications précédentes, **caractérisé en ce que** l'alliage à base d'aluminium est exempt de cuivre ou comprend au plus de 0,5 à 5 % en poids de cuivre.

6. Élément de palier lisse selon une ou plusieurs des revendications précédentes, **caractérisé en ce que** l'alliage à base d'aluminium comprend de 3 à 5,5 % en poids de magnésium.

7. Élément de palier lisse selon une ou plusieurs des revendications précédentes, **caractérisé en ce que** l'alliage à base d'aluminium comprend de 0,2 à 5,5 % en poids de manganèse.

8. Élément de palier lisse selon une ou plusieurs des revendications précédentes, **caractérisé en ce que** l'épaisseur de couche de la couche de roulement (8) est de 2 à 25 µm, en particulier de 4 à 20 µm.

9. Procédé de fabrication d'un élément de palier lisse selon une ou plusieurs des revendications 1 à 8, **caractérisé en ce qu'**un composite constitué d'une couche de support métallique (4) et d'une couche métallique de palier (6) est amené à la forme de l'élément de palier lisse (2) à fabriquer, **en ce qu'**un côté supérieur (12) de la couche de support métallique (6) est ensuite irradié mécaniquement avant l'application de la couche de roulement (8), de sorte qu'une zone de surface (14) riche en oxyde d'aluminium d'une épaisseur de 0,5 à 5 µm est produite via la couche métallique de palier (6), et **en ce qu'**une couche de vernis de glissement (10) avec un liant polymère est appliquée en tant que couche de roulement (8), en particulier pulvérisée, laminée ou extrudée, sur le côté supérieur irradié (12) de la couche métallique de palier (6).

10. Procédé selon la revendication 9, **caractérisé en ce qu'**une hauteur de vallée dite réduite S_{VK} de 0,5 à 1,5 µm et un volume dit vide des vallées V_{VV} de 0,06 à 0,16 µm³/µm² sont produits.

11. Procédé selon l'une ou plusieurs des revendications 9 ou 10, **caractérisé en ce que** la couche de support métallique (6) est irradiée à une pression de faisceau comprise entre 1,0 et 1,5 bar.

12. Procédé selon l'une ou plusieurs des revendications 9 à 11, **caractérisé en ce qu'**une dimension maximum d'une section transversale de buse de projection, à la sortie, est de 10 à 14 mm, en particulier de 11 à 13 mm, en particulier de 12 mm.

13. Procédé selon une ou plusieurs des revendications 9 à 12, **caractérisé en ce qu'**une distance d'une sortie d'une buse de projection (16) depuis le côté supérieur (12) de la couche de support métallique (6) à irradier de l'élément de palier lisse est de 80 à 120 mm, en particulier de 90 à 110 mm, en particulier de 100 mm.

14. Procédé selon une ou plusieurs des revendications 9 à 13, **caractérisé en ce qu'**un ou deux ou trois dispositifs de projection sont utilisés avec une buse de projection respective (16), qui sont agencées successivement dans une direction circonférentielle de l'élément de palier lisse.

15. Procédé selon une ou plusieurs des revendications 9 à 14, **caractérisé en ce qu'**une vitesse d'avance de la buse de projection (16) dans une direction axiale de l'élément de palier lisse est comprise entre 5 mm/s et 60 mm/s, en particulier entre 10 mm/s et 60 mm/s et en particulier entre 10 mm/s et 50 mm/s.

16. Procédé selon une ou plusieurs des revendications 9 à 15, **caractérisé en ce que** la couche de support métallique (6) est irradiée avec un moyen de projection, en particulier un corindon, présente une taille de particule d'au plus 100 µm, dans lequel au moins 60 % en masse du moyen de projection présente une taille de particule d'au moins 45 µm.
